**Europäisches Patentamt**

**European Patent Office**

**Office européen des brevets**

(19)

(11) Veröffentlichungsnummer: **0 155 589**
**B1**

(12) # EUROPÄISCHE PATENTSCHRIFT

(45) Veröffentlichungstag der Patentschrift:
**26.07.89**

(21) Anmeldenummer: **85102497.6**

(22) Anmeldetag: **06.03.85**

(51) Int. Cl.⁴: **B 05 D 7/26,** B 05 D 3/02,
C 09 D 5/02

(54) Verfahren zur Einbrennbeschichtung von Oberflächen fester Stoffe.

(30) Priorität: **21.03.84 DE 3410235**

(43) Veröffentlichungstag der Anmeldung:
**25.09.85 Patentblatt 85/39**

(45) Bekanntmachung des Hinweises auf die Patenterteilung:
**26.07.89 Patentblatt 89/30**

(84) Benannte Vertragsstaaten:
**AT BE DE FR GB IT NL SE**

(56) Entgegenhaltungen:
**EP-A- 0 049 819**
**EP-A- 0 064 228**
**DE-A- 2 412 066**
**DE-A- 2 626 845**
**FR-A- 2 176 395**

(73) Patentinhaber: **HOECHST AKTIENGESELLSCHAFT,**
**Postfach 80 03 20, D-6230 Frankfurt am Main 80 (DE)**

(72) Erfinder: **Engel, Dieter, Dr., Rüsselsheimer Strasse 33,**
**D-6092 Kelsterbach (DE)**
Erfinder: **Mondt, Josef, Dr., Altkönigstrasse 24d,**
**D-6240 Königstein/Taunus (DE)**
Erfinder: **Rinno, Helmut, Dr., Goethestrasse 38,**
**D-6238 Hofheim am Taunus (DE)**

**Beschreibung**

Die Erfindung betrifft ein Verfahren zur Einbrennbeschichtung von Oberflächen fester Stoffe, insbesondere von Metallen, unter Verwendung wäßriger Dispersionen, enthaltend vernetzbare Dispersionscopolymerisate aus olefinisch ungesättigten Monomeren als Bindemittel.

Steigende Rohstoffpreise, restriktive Umweltschutzauflagen und auch sicherheitstechnische Erfordernisse führten in den vergangenen Jahren zu zahlreichen Entwicklungen auf dem Einbrennlackiersektor mit dem gemeinsamen Ziel, Systeme zu finden, die nicht nur wirtschaftlich, sondern auch umweltfreundlich sind.

Folgende Anforderungen sind dabei an das Lackmaterial zu stellen:

1) Keine oder nur geringe Gehalte an organischen Lösungsmitteln und schädlich wirkenden Stoffen im Verarbeitungszustand.

2) Keine oder nur geringfügige Freisetzung von Spaltprodukten beim Einbrennen der Lacksysteme.

3) Verwendung von weitgehend nichttoxischen Rohstoffen in den Lackformulierungen.

4) Problemlose Reinigung und Entsorgung der Lackierbetriebe.

5) Problemlose Abwasseraufbereitung.

6) Kostensparende Herstellung und Verarbeitung.

7) Keine oder nur geringfügige Änderungserfordernisse an den technischen Einrichtungen bestehender Lackieranlagen.

Unter Zugrundelegung dieser Anforderungen formierten sich im wesentlichen drei Entwicklungsrichtungen neuer Lackiersysteme. Der Leitgedanke der ersten Richtung besteht in einer Weiterentwicklung der konventionellen Lacke zu festkörperreichen und damit lösungsmittelarmen «high-solids-Lackiersystemen». Aber auch bei diesen wird während des Applikations-, des Ablüft- und des Einbrennvorganges noch Lösungsmittel abgegeben, das beispielsweise in Nachverbrennungsanlagen beseitigt werden muß. Die Verminderung des Lösungsmittelgehalts in den high-solids-Systemen gelingt natürlich nur durch Einsatz spezieller Bindemittel. Diese müssen in höher konzentrierten Lösungen deutlich geringere Viskositäten als die üblichen Lackharze haben. Die Filmbildung kann aber nur erfolgen, wenn beim Einbrennen der Aufbau eines dreidimensionalen Netzwerkes möglich ist. Die Bindemittel müssen somit aus reaktiven Partnern bestehen.

Diesen Lackformulierungen ist, wie bereits angedeutet, allen gemeinsam, daß von einem vollständigen Verzicht auf Lösungsmittel keine Rede sein kann und somit eine Erfüllung aller vorstehend erwähnten Anforderungen aus prinzipiellen Gründen nicht möglich ist.

Die zweite Entwicklungsrichtung, die sich aus den oben genannten Anforderungen entwickelte, sind die sog. Pulverlacke. Man versteht darunter thermoplastische Kunststoffe, die in Pulverform auf Substrate aufgetragen werden. Man unterscheidet verschiedene Arten der Auftragstechnik, wie z.B. elektrostatisches Pulverspritzen, elektrostatisches Wirbelsintern, Schüttsintern, Rotationssintern u.a.

Die Entwicklung der Pulverlacktechnologie bedeutet zwar im Sinne eines ökologisch vorteilhaften Lackiersystems eine deutliche Verbesserung. Nachteile in Form hoher Investitionskosten, eines komplizierten Farbtonwechsels und hohen Materialverbrauchs sind jedoch vorhanden. Zu beachten ist ferner, daß die Pulverform des Lackmaterials die Gefahr von Staubexplosionen in sich birgt und die Lagerung sowie der Versand der Lackprodukte Probleme aufwerfen.

Die dritte Entwicklungsrichtung beruht auf dem Gedanken, Lacksysteme auf Basis wäßriger Bindemittelsysteme zu formulieren. Dabei ist zu unterscheiden zwischen Systemen, deren in Wasser dispergierte feste Phase aus bereits in sich pigmentierten Lackpartikeln besteht und Systemen, bei denen Bindemittel- und Pigmentpartikel getrennt nebeneinander vorliegen. Der erste Fall liegt bei den sog. «powder-slurries» vor, während der zweite Fall die Situation bei Einbrenndispersionen beschreibt. Die Entwicklung der «aqueous powder suspensions» bzw. «slurry-paints» beruht auf dem Gedanken, den umweltfreundlichen Pulverlack mit Wasser als Verdünnung zu einem spritzfertigen wäßrigen Lack zu vermischen, der auf konventionellen Lackieranlagen ohne die aufwendigen Verfahren zur Pulverlackierung verarbeitet werden kann. Die Herstellung der «powder-slurries» kann nach verschiedenen Verfahren erfolgen, die alle sehr aufwendig sind und bei denen zunächst ein konventioneller, lösungsmittelhaltiger Lack bzw. ein Pulverlack hergestellt werden muß, der anschließend in eine wäßrige Sekundärdispersion übergeführt wird.

Eine wesentliche Vereinfachung der Herstellung wäßriger Einbrennlackiersysteme besteht nun darin, hochpolymere Bindemitteldispersionen, die z.B. über Emulsionspolymerisation hergestellt wurden, einzusetzen und diese wie eine normale Dispersionsfarbe zu pigmentieren. Der prinzipielle Unterschied zu den oben genannten Sekundärdispersionen besteht darin, daß in derartigen pigmentierten Dispersionen Bindemittel und Pigment getrennt nebeneinander in wäßriger Suspension vorliegen, während es sich bei den Sekundärdispersionen um wäßrige Suspensionen von bereits pigmentierten Lackteilchen handelt. Ein entscheidender Vorteil von Lacksystemen auf der Basis pigmentierter Dispersionen besteht neben verarbeitungstechnischen und ökologischen Vorteilen in der kostengünstigen Herstellweise. Das Bindemittel kann als wäßrige Dispersion, beispielsweise über Emulsions- und/oder Suspensionspolymerisation, hergestellt und unmittelbar eingesetzt werden.

Die hierfür zum Einsatz kommenden Bindemittel-Dispersionen können bei Raumtemperatur bereits verfilmen oder auch erst durch Einbrennvorgänge zum Verfilmen gebracht werden. Einbrenndispersionen auf Wasserbasis, die bei der angewandten Trocknungs- oder Ablüfttemperatur bzw. darunter bereits verfilmen, können in den fertigen Beschichtungen aber zu charakteristischen Lackfehlern, den sog. Kochern, führen.

Diese Kocher entstehen dadurch, daß nach der Applikation des wäßrigen Lackmaterials auf die zu beschichtende Substratoberfläche die Verfilmung an der Lackoberfläche bereits beim Abdunsten des Wassers einsetzt. Das im Inneren des Films noch vorhandene Wasser kann nicht entweichen, da die Filmoberfläche wie eine Dampfsperre wirkt. Erst beim Einbrennvorgang verdampft das Wasser, wobei die bereits verfilmte Oberfläche wieder aufgerissen wird. Infolge der bei erhöhter Temperatur einsetzenden Vernetzung wird die durch den Dampfaustritt zerstörte Filmstelle nicht wieder geschlossen. Es resultiert i.a. eine kraterförmige Schädigung im Lack, die eine Schwachstelle in bezug auf Korrosionsschutz und mechanische Beanspruchbarkeit darstellt, abgesehen von der Beeinträchtigung des dekorativen Effekts der Lackierung.

Die Vermeidung eines derartigen Lackfehlers kann gelingen durch Anheben der Mindestfilmbildungstemperatur der Bindemitteldispersion auf Werte oberhalb der Ablüft- oder Trocknungstemperatur.

Aus der DE-OS 2 416 446 ist z.B. ein Verfahren zur Oberflächenbeschichtung bekannt, bei dem eine pigmentierte oder nicht pigmentierte wäßrige Dispersion eines schmelzbaren Copolymerisats mit mittleren Teilchendurchmessern im Bereich von 0,5 bis 10 μm auf das zu beschichtende Substrat aufgebracht wird. Die Mindestfilmbildungstemperatur soll zwischen 10 und 200 °C liegen. Die auf das Substrat aufgebrachte Beschichtung soll nach dem vollständigen Ablüften des Wassers in kohärenter Pulverform vorliegen. Das Einbrennen erfolgt bei Temperaturen, bei denen die Partikel zu einem endlosen, rißfreien Film schmelzen, z.B. im Falle von Acrylatpolymerisaten bei 177 °C (15 Min.). Die Dicke des Überzugs liegt im Bereich von 2,5 bis 250 μm. Dieses Beschichtungsverfahren hat jedoch den Nachteil, daß zur Herstellung der Copolymerisate mit den benötigten Teilchengrößen fünf Verfahrensstufen erforderlich sind, was u.a. sehr unökonomisch ist.

Um gegen die verschiedensten Einflüsse resistente Oberflächenbeschichtungen zu erhalten, werden letztere üblicherweise nach der Applikation vernetzt. Dies geschieht entweder über sog. Fremdvernetzung, wobei eine oder mehrere weitere Komponenten, die reaktive Gruppierungen tragen, bei der Formulierung zugemischt werden, oder über Selbstvernetzung, wozu reaktive Monomere in das Bindemittel mit einpolymerisiert werden. Die Vernetzung kann in beiden hier unterschiedenen Fällen z.B. durch Wärme, Licht oder Strahlung induziert werden. Ein Maß für die Widerstandsfähigkeit von Oberflächenbeschichtungen ist, neben der Wasserfestigkeit, die Lösungsmittelbeständigkeit.

Was die Lösungsmittel- und Wasserbeständigkeit von Einbrennbeschichtungen sowie deren mechanische Beanspruchbarkeit, insbesondere die sogenannte «Erichsentiefung» betrifft, so hat sich gezeigt, daß nach der DE-OS 2 416 446 hergestellte Beschichtungen nach dem Einbrennen die diesbezüglich erforderlichen vorteilhaften Eigenschaften häufig nicht besitzen. Wählt man beispielsweise, um eine gute Erichsentiefung zu erzielen, Bindemittelpolymerisate mit relativ hohen Molekulargewichten aus, so liegt deren Schmelzviskosität beim Einbrennvorgang meist zu hoch, woraus ein ungleichmäßiges Verlaufen der Beschichtung resultiert, was zu erheblich strukturierten Filmoberflächen führen kann. Auf solche Weise lassen sich auch keine ausreichenden Lösungsmittel- und Wasserbeständigkeiten erzielen und die erhaltenen Beschichtungen besitzen kein dekoratives Aussehen.

Setzt man andererseits das Molekulargewicht der Bindemittelpolymerisate herab, so kann man zwar gut verlaufende Filmoberflächen erhalten, die resultierenden Einbrennbeschichtungen besitzen jedoch unzureichende mechanische Eigenschaften.

Die Aufgabe bestand somit darin, ein in Wasser dispergiertes Bindemittel verfügbar zu machen, das einmal, verglichen mit dem Stand der Technik, auf einfache Weise hergestellt werden kann und zum anderen hinsichtlich anwendungstechnischer Parameter, wie Schmelzviskosität, Filmbildungstemperatur, Pigmentverträglichkeit, Lösungsmittel- bzw. Wasserbeständigkeit, Elastizität, Haftung, Glanz und Abbildungsschärfe den an vernetzbare Bindemittel zu stellenden Anforderungen entspricht.

Es wurde nun überraschenderweise gefunden, daß man die vorgenannten Nachteile vorteilhaft überwinden kann, wenn man für die Herstellung von vernetzbaren Oberflächenbeschichtungen ein Bindemittel auf der Basis eines grobteiligen und zumindest teilweise übliche vernetzungsfähige Gruppen tragenden Dispersionscopolymerisats aus olefinisch ungesättigten Monomeren verwendet, dessen durchschnittlicher Teilchendurchmesser bevorzugt im Bereich von 0,4 bis 10 μm und dessen Mindestfilmbildungstemperatur (= MFT) oberhalb der Ablüft- bzw. Trocknungstemperatur liegt und das Bindemitteldispersionscopolymerisat aus einem Gemisch von mindestens 2 Komponenten besteht, von denen mindestens eine Komponente A, die grobteilig ist, ein relativ niedriges durchschnittliches Molekulargewicht und mindestens eine weitere Komponente B, die grobteilig oder feinteilig sein kann, ein relativ hohes durchschnittliches Molekulargewicht besitzt.

Erfindungsgemäß liegen die niedrigen durchschnittlichen Molekulargewichte vorzugsweise im Bereich von 5000 bis 500 000, insbesondere 10 000 bis 200 000, und die hohen durchschnittlichen Molekulargewichte vorzugsweise im Bereich von 50 000 bis $10 \cdot 10^6$, insbesondere 200 000 bis $5 \cdot 10^6$. Die Molekulargewichtsbestimmung kann nach üblichen Methoden erfolgen. Anstelle des Molekulargewichts kann als Eigenschaftsparameter analog z.B. auch die Schmelzviskosität (mPa·s) des Dispersionscopolymerisats zugrunde gelegt werden, wie dies in den nachstehenden Ausführungsbeispielen der Fall ist. Dabei entsprechen steigende Viskositätszahlen steigenden Molekulargewichten.

Der Gewichtsanteil der Komponente A entspricht vorzugsweise mindestens dem Gewichtsanteil der Komponente B und liegt insbesondere im Bereich von A:B = 99:1 bis 1:1.

Die Mindestfilmbildungstemperatur (MFT) der vernetzungsfähigen Bindemittelcopolymerisatdispersion liegt bevorzugt oberhalb 30 °C, insbesondere im Temperaturbereich von 35 bis 120 °C, vorzugsweise 40 bis 80 °C.

Die Einbrenntemperatur für die getrocknete Dispersionsbeschichtung liegt vorzugsweise oberhalb der Glasübergangstemperatur (Tg) des Dispersionscopolymerisats. Sie wird im allgemeinen den durch die Reaktionsfähigkeit der vernetzungsfähigen Gruppen in dem Copolymerisat bedingten Erfordernissen angepaßt.

Der mittlere Teilchendurchmesser der Bindemitteldispersionscopolymerisatpartikel der Komponente A liegt bevorzugt oberhalb von 0,5 µm, insbesondere im Bereich von 0,5 bis 5 µm.

Die Herstellung erfindungsgemäßer, vernetzbarer Bindemittelcopolymerisatdispersionen kann vorteilhaft und bevorzugt in der Weise erfolgen, daß man grobteilige oder auch feinteilige Dispersionen von übliche vernetzungsfähige Gruppen tragenden Copolymerisaten mit hohem durchschnittlichen Molekulargewicht mit grobteiligen Dispersionen von übliche vernetzungsfähige Gruppen tragenden Copolymerisaten mit niedrigem durchschnittlichen Molekulargewicht in dem gewünschten Mengenverhältnis vermischt. Es lassen sich mit solchermaßen hergestellten Bindemitteldispersionen Einbrennbeschichtungen von sehr guter Qualität herstellen, die insbesondere nicht spröde sind und beispielsweise Erichsentiefungen von über 8 mm ergeben können.

Das u.a. der DE-OS 2 416 446 zu entnehmende Vorurteil, wonach in vernetzbaren Bindemitteldispersionscopolymerisaten das durchschnittliche Molekulargewicht des Copolymerisats auf niedrigen Werten, bevorzugt im Bereich zwischen 40 000 und 400 000, gehalten werden soll, um brauchbare Beschichtungsergebnisse sowie gutes Verlaufen des Lacks während des Einbrennvorgangs erzielen zu können, kann angesichts des vorstehend beschriebenen Erfindungsgegenstandes als widerlegt angesehen werden. Es hat sich außerdem gezeigt, daß die Verwendung von Bindemitteldispersionscopolymerisaten mit den dem Stand der Technik zu entnehmenden niedrigen Molekulargewichten im allgemeinen zu ausgesprochen spröden Einbrennbeschichtungen mit Erichsentiefungen von nur etwa 1 mm führt. Demgegenüber können bei Verwendung von erfindungsgemäßen Bindemitteldispersionscopolymerisaten vernetzte Einbrennbeschichtungen erhalten werden, die nicht nur sehr gute Wasserbeständigkeit und ausgezeichnete Lösungsmittelbeständigkeiten, sondern darüber hinaus auch hervorragende Erichsentiefungswerte aufweisen können.

Gegenstand der Erfindung ist daher ein Verfahren zur Einbrennbeschichtung von Oberflächen fester Materialien durch Auftragen der benötigten Menge einer wäßrigen Dispersion auf die zu beschichtende Oberfläche, wobei die Dispersion als Bindemittel ein grobteiliges, vernetzungsfähiges Dispersionscopolymerisat aus olefinisch ungesättigten Monomeren sowie gegebenenfalls weitere Bestandteile aus der Gruppe Pigmente, Farbstoffe, Füllstoffe, wasserlösliche und/oder wasserdispergierbare Harze, Fremdvernetzer, Vernetzungskatalysatoren, Verdickungsmittel, Thixotropierungsmittel, Netzmittel, Korrosionsschutzmittel, Frostschutzmittel, Lichtstabilisatoren, Antioxidantien und Entschäumer enthält, Ablüften bzw. Trocknen der feuchten Beschichtung und nachfolgendes Einbrennen, dadurch gekennzeichnet, daß das vernetzungsfähige Dispersionscopolymerisat aus einem Gemisch von mindestens 2 Komponenten, die gleiche oder verschiedene Monomereinheiten enthalten können, besteht, von denen mindestens eine Komponente A, die grobteilig ist, ein durchschnittliches Molekulargewicht im Bereich von 5000 bis 500 000 und mindestens eine Komponente B, die grobteilig oder feinteilig sein kann, ein durchschnittliches Molekulargewicht im Bereich von 50 000 bis $10 \cdot 10^6$ besitzt, und man die Trocknung der aufgetragenen Dispersionsmenge bei einer Temperatur unterhalb der Mindestfilmbildungstemperatur der Dispersion, die im Bereich von 30 bis 120 °C liegt, durchführt und danach die getrocknete Beschichtung bei einer Temperatur oberhalb der Glasübergangstemperatur des Copolymerisats einbrennt.

Die Herstellung erfindungsgemäßer Bindemittel-Dispersionen erfolgt bevorzugt durch Emulsionscopolymerisation, wobei sowohl das über wenigstens zwei Stufen verlaufende Verfahren der Saatpolymerisation, als auch einstufige Verfahren angewandt werden können, die bei entsprechender Fahrweise die gewünschten Teilchengrößen hervorbringen können. Es können außerdem auch Suspensionscopolymerisationsverfahren angewandt werden. Zur Erzielung niedriger Molekulargewichte können Radikalkettenüberträgersubstanzen, besonders bevorzugt Mercaptogruppen enthaltende Verbindungen mitverwendet werden.

Wird das Verfahren der Saatpolymerisation angewendet, so sollte man aus praktischen Gründen die Zahl der Wachstumsschritte bzw. Quellschritte möglichst niedrig halten. Bevorzugt werden Saatpolymerisationen, die in höchstens zwei Schritten einen grobteiligen Latex erbringen können. Der erste Schritt besteht dabei in der Herstellung eines Saatlatex, während im zweiten Schritt der Saatlatex unter möglichst vollständiger Vermeidung von Teilchenneubildungen auf die gewünschten Teilchendurchmesser aufgequollen wird. Dazu geht man bevorzugt von einem weitgehend monodispersen Latex nach dem Stand der Technik als Saatgrundlage aus, auf den in einem weiteren Schritt soviel Monomeres aufgebracht wird, daß unter Beibehaltung der Monodispersität im endgültigen Latex ein mittlerer Teilchendurchmesser größer als 0,5 µm erzielt wird. Wie bereits bekannt (vgl. Houben-Weyl, Methoden der Organischen Chemie Bd. 14 I, 339 f, (1961)), ist dabei die Dosierung des Emulgators bzw. die jeweilige Konzentration an Emulgator von wesentlicher Bedeutung. So ist z.B. u.a. darauf zu achten, daß die Oberflächenbedeckung der Partikel mit ionischem Emulgator bevorzugt unter 100% liegt.

Als Emulgatoren können ionische und nichtionische Emulgatoren oder Mischungen davon eingesetzt werden. Von den anionischen Emulgatoren werden z.B. bevorzugt eingesetzt die Natriumsalze höherer Fettalkoholsulfate, höherer Alkylsulfonate, Alkylarylsulfonate sowie die Alkali- und/oder Ammoniumsalze von Alkyl- oder Alkylarylpolyglykolethersulfonaten oder -sulfaten.

Bei den nichtionischen Emulgatoren werden bevorzugt oxethylierte Fettalkohole oder oxethylierte Alkylphenole eingesetzt.

Die Gesamtmenge des während der Copolymerisation zudosierten Emulgators ist im Hinblick auf die gewünschte Teilchengröße nach Möglichkeit gering zu halten. Ist beispielsweise zur Erhöhung der Lagerungsstabilität der Dispersion eine bestimmte Emulgatormenge notwendig, so kann diese teilweise oder vollständig nachträglich zudosiert werden.

Die zur Copolymerisation eingesetzten olefinisch ungesättigten, copolymerisationsfähigen Monomeren müssen so ausgewählt bzw. kombiniert werden, daß das resultierende copolymere Bindemittel und das fertige Beschichtungssystem eine solchermaßen «minimale Filmbildungstemperatur» (MFT) aufweisen, daß letztere noch oberhalb der Ablüft- oder Trocknungstemperatur liegt. Als Anhaltspunkt zur praktischen Auswahl der Monomeren bezüglich der MFT kann die Glastemperatur der betreffenden Homopolymerisate herangezogen werden, um auf diese Weise entsprechende Filmbildungstemperaturen einzustellen.

Das copolymere Bindemittel muß zur Erzielung der gewünschten anwendungstechnischen Eigenschaften im fertigen Lack neben nichtfunktionellen Monomereinheiten erfindungsgemäß außerdem auch funktionelle Monomereinheiten enthalten, mit denen sich Vernetzungsreaktionen durchführen lassen. Dabei kann sowohl eine Selbstvernetzung der Copolymerisatmoleküle als auch eine Fremdvernetzung mit anderen, zusätzlich eingebrachten Komponenten vorgenommen werden.

Als nichtfunktionelle olefinisch ungesättigte Monomere werden bevorzugt Ester der Acryl- und Methacrylsäure eingesetzt, deren Alkoholkomponente 1 bis 18 C-Atome enthalten kann. Beispiele dafür sind Ester mit den Resten Methyl-, Ethyl-, Methylpropyl-, n-Butyl-, 2-Ethylhexyl-, Heptyl-, Octyl-, Propyl-, 2-Methylbutyl-, Pentyl-, Methoxymethyl-, Ethoxymethyl-, Ethoxyethyl-, Isobutyl-, Cyclohexyl- oder n-Hexyl- als Alkoholkomponente.

Des weiteren können auch andere nichtfunktionelle Monomere, wie beispielsweise Vinylaromaten, eingesetzt werden, bevorzugt Styrol, Vinyltoluol und α-Methylstyrol. Auch Acrylnitril und Methacrylnitril können vorteilhaft eingesetzt werden.

Um Vernetzungsreaktionen im applizierten Lack bei der Verfilmung durchführen zu können, müssen sowohl im Falle der Selbstvernetzung als auch im Falle der Fremdvernetzung Monomereinheiten mit funktionellen Gruppen in dem Bindemittelcopolymerisat vorhanden sein. Unter Monomeren mit funktionellen Gruppen sind solche zu verstehen, die neben ihrer olefinischen Doppelbindung, mit der sie während der Bindemittelherstellung in das entstehende Copolymerisat einpolymerisiert werden, zusätzlich noch chemische Gruppierungen tragen, die zu einem späteren Zeitpunkt, bevorzugt nach der Applikation des fertigen Lacks unter Einwirkung von Energie (thermische, optische, Strahlen) und/oder Katalysatoren, mit chemischen Gruppierungen der gleichen oder einer anderen Art umgesetzt werden können, in der Weise, daß ein Netzwerk entsteht.

Bevorzugte Beispiele für hier einsetzbare chemische Gruppierungen, die im applizierten Lackmaterial zu Vernetzungen führen können, sind Carbonsäure-, Sulfosäure-, Hydroxy-, Amino-, Amido-, Keto-, Aldehyd-, Lactam-, Lacton-, Isocyanat- und Epoxygruppen. Copolymerisationsfähige Monomere, die derartige funktionelle Gruppierungen tragen, sind bekannt.

Vernetzungsfähige Gruppen tragende Comonomereinheiten in erfindungsgemäß eingesetzten Dispersionscopolymerisaten sind daher bevorzugt solche, die funktionelle, vernetzungsfähige Reste aus der Reihe der Hydroxy-, Amido-, Aldehyd-, Carboxyl-, Amino-, Epoxy-, Thiol-, Cyano-, N-Methylol-, Isocyanato- und/oder blockierte Isocyanato-Gruppen enthalten. Besonders bevorzugt sind Hydroxy-, Carboxyl- und Epoxy-Gruppen.

In einer bevorzugten Ausführungsform enthält die erfindungsgemäße wäßrige Dispersion zusätzlich ein wasserlösliches und/oder wasserdispergierbares Harz oder Harzgemische, insbesondere aus der Reihe der Acrylatharze, Melamin-Formaldehydharze und Isocyanatharze.

Das erfindungsgemäße Verfahren wird vorzugsweise zur Herstellung von Einbrennlacken, Hydrofüllern, Metallic-Lacken und «Electropowder Coatings» (= EPC-Lacken) angewandt.

Von Monomeren, die Carbonsäuregruppierungen tragen, werden vorzugsweise Acrylsäure, Methacrylsäure, Crotonsäure, Itaconsäure, Fumarsäure, Maleinsäure, Maleinsäurehalbester, bzw. die Halbester der Itacon- und der Fumarsäure eingesetzt. Besonders bevorzugt sind Acryl- und Methacrylsäure.

Von Monomeren, die zur Vernetzung geeignete Epoxidgruppierungen tragen, werden bevorzugt Glycidylmethacrylat, Glycidylacrylat und Allylglycidylether eingesetzt.

Weitere copolymerisierbare Monomere, die funktionelle Gruppierungen tragen und für Vernetzungsreaktionen erfindungsgemäßer Bindemittel ausgenutzt werden können, sind Monomere mit Isocyanatgruppen, z.B. bevorzugt Isocyanatoethylmethacrylat, sowie deren Derivate mit blockierter Isocyanatgruppe, ferner Aminoalkylverbindungen, vorzugsweise z.B. Methylaminoethylmethacrylat und tert.-Butylaminoethylmethacrylat, Amide, vorzugsweise z.B. Methacrylamid, N-Alkoxyalkylamide, vorzugsweise z.B. Methoxymethylmethacrylamid oder Ethoxymethylmethacrylamid, Hydroxyalkylamide, vorzugsweise z.B. N-Methylolmethacrylamid, Hydroxyalkylester, vorzugsweise z.B. Hydroxyethylmethacrylat und Hydroxypropylmethacrylat; ferner die Analoga der oben genannten Methacrylsäurederivate von anderen ungesättigten Säuren, vorzugsweise von Acrylsäure, Itaconsäure, Crotonsäure.

Bevorzugte Bindemitteldispersionscopolymerisate können als Monomereinheiten, bezogen auf das Dispersionscopolymerisat, beispielsweise 0 bis 85 Gew.-% Methylmethacrylat, 60 bis 0 Gew.-% Butylacrylat, 0 bis 20 Gew.-% Hydroxyethylmethacrylat, 20 bis 0 Gew.-% Glycidylmethacrylat und 0 bis 20 Gew.-% Acrylsäure oder Methacrylsäure enthalten. Besonders bevorzugte Bindemitteldispersionen können, bezogen auf das Dispersionscopolymerisat, beispielsweise 50 bis 85 Gew.-% Methylmethacrylat, 15 bis 50 Gew.-% Butylacrylat, 0 bis 15 Gew.-% Hydroxyethylmethacrylat, 15 bis 0 Gew.-% Glycidylmethacrylat und 2 bis 10 Gew.-% Acrylsäure oder Methacrylsäure als Monomereinheiten enthalten.

Neben der Selbstvernetzung besteht auch noch die Möglichkeit der sog. Fremdvernetzung. Hierzu wird eine fertige Bindemittelcopolymerisatdispersion, die einen oder mehrere der oben beschriebenen Typen funktioneller Monomereinheiten enthält, mit einer weiteren niedermolekularen, oligomeren oder polymeren Verbindung, die ebenfalls funktionelle Gruppierungen der oben genannten Art trägt, vermischt.

Die Bindemittelvernetzung erfolgt auch bei der Fremdvernetzung, vorzugsweise beim Einbrennen, bevorzugt durch Reaktion zwischen dem funktionalisierten Bindemittelcopolymerisat und der zugesetzten Fremdkomponente. Dabei kann nicht immer ausgeschlossen werden, daß beide Komponenten auch noch mit sich selbst Reaktionen/Vernetzungen eingehen können.

Beispiele für vernetzende Fremdkomponenten sind bevorzugt Melamin-Formaldehyd-Harze, Acrylat-Harze und verkappte Isocyanat-Harze, d.h. Isocyanat-Harze mit blockierter Isocyanatgruppe, die mit oder ohne Einwirkung von Katalysatoren, wie vorzugsweise Malein-, Zitronen-, Phosphor-, Alkylphosphorsäure, p-Toluolsulfonsäure und/oder Naphthalindisulfonsäure, in Gegenwart von Bindemittelcopolymerisaten, die bevorzugt Hydroxyl-, Amid- oder Carboxylgruppen bzw. andere der oben beschriebenen funktionellen Gruppierungen tragen, beim Einbrennen hochvernetzte Beschichtungen ergeben können.

Ganz besonders bevorzugt werden Acrylharze und/oder methylverätherte Melaminharze (z.B. (R)Maprenal MF 900) als fremdvernetzende Komponenten eingesetzt. In einer bevorzugten Ausführungsform der Beschichtung unter Fremdvernetzung werden beispielsweise 20 Gew.-Teile einer erfindungsgemäßen Dispersion mit 3,4 Gew.-Teilen Maprenal MF 900 abgemischt und nach der Trocknung 30 Minuten bei 180 °C eingebrannt.

Eine gezielte Einstellung von Molekulargewichten bzw. die Erzielung niedriger Molekulargewichte kann dadurch erfolgen, daß man bei der Herstellung der Dispersionscopolymerisate durch Emulsions- oder Suspensionscopolymerisation Radikalkettenüberträgersubstanzen zusetzt. Als Radikalkettenüberträgersubstanzen kommen dabei bevorzugt solche bekannten Verbindungen infrage bzw. in solchen Mengen zum Einsatz, wie sie z.B. bei der Emulsionspolymerisation häufig zum Zweck der Molekulargewichtsregelung eingesetzt werden, z.B. Mercaptane, wobei bevorzugt n-Dodecylmercaptan, tert. Dodecylmercapten, Thioglykolsäure und Thioglykolsäureester verwendet werden, oder auch halogenierte Verbindungen, wie z.B. Tetrachlorkohlenstoff, Bromtrichlormethan, Chlorbenzol bzw. andere übertragungsaktive Verbindungen, bevorzugt Toluol und α-Methylstyrol. Besonders bevorzugt sind polyfunktionelle HS-Gruppen enthaltende Radikalkettenüberträger, insbesondere z.B. die Thioglykolsäureester von Ethylenglykol, 1,2-Propylenglykol, 1,3-Propylenglykol, 1,2-Butylenglykol, 1,3-Butylenglykol, 1,4-Butylenglykol, Glycerin, Trimethylolpropan, Pentaerythrit und Di-, Tri- oder Tetraethylenglykol. Ganz besonders bevorzugt ist Tetrakismercaptoacetylpentaerythrit.

Eine bevorzugte Form der erfindungsgemäß eingesetzten Bindemittelcopolymerisatdispersionen besteht darin, daß Abmischungen von wenigstens zwei verschiedenen Dispersionen vorgenommen werden. Beispielsweise wird bevorzugt ein Latex B mit hohem Molekulargewicht (z.B. $M_w = 200\,000$ bis $5 \cdot 10^6$ oder höher), hergestellt ohne die Verwendung eines Molekulargewichtsreglers, mit einem grobteiligen Latex A von niedrigem Molekulargewicht (z.B. $M_w = 20\,000$ bis $200\,000$), hergestellt unter Verwendung eines Molekulargewichtsreglers, solchermaßen abgemischt, daß die Mindestfilmbildungstemperatur der Mischung oberhalb der Ablüft- bzw. Trocknungstemperatur der Beschichtungen liegt. Die dabei eingesetzten Bindemitteldispersionen können identische, aber auch unterschiedliche Monomerzusammensetzungen besitzen. Die hierbei in Frage kommenden Monomeren sind sowohl für den Fall der Selbstvernetzung als auch für den Fall einer Fremdvernetzung bereits vorstehend ausführlich beschrieben worden.

Mit Hilfe der erfindungsgemäßen Abmischungen können die mechanischen Eigenschaften von Lacksystemen entscheidend verbessert werden. Auf der einen Seite kann z.B. durch niedrigmolekulare, harte Dispersionscopolymerisatbestandteile beim Einbrennen eine Erniedrigung der Schmelzviskosität der zu vernetzenden Beschichtungsmasse (z.B. auf 300–100 000 mPa·s, bevorzugt 500–50 000 mPa·s) erzielt und dadurch ein guter Filmverlauf bewirkt werden, während auf der anderen Seite die hohen Molekulargewichte der zweiten Komponente im fertig eingebrannten Film zu guten mechanischen Eigenschaften, speziell guter Erichsentiefung, führen.

So zeigt z.B. eine Einbrennbeschichtung, die lediglich aus einer einzelnen, molekulargewichtsgeregelten, niedrigmolekularen Komponente hergestellt wurde, im allgemeinen eine Erichsentiefung von nur etwa 1–2 mm, während erfindungsgemäß nach dem Abmischen mit einer Komponente hohen mittleren Molekulargewichtes, hergestellt ohne die Verwendung eines Molekulargewichtsreglers, Einbrennlackierungen resultieren, die eine Erichsentiefung von z.B. 8 mm und höher aufweisen. Die Abmischung der Komponenten ist dabei in einem solchen Gewichtsverhältnis vorzunehmen, daß die übrigen günstigen Eigenschaften von Einbrennbeschichtungen unbeeinträchtigt bleiben, wie z.B. Glanz, Härte, Wasserbeständigkeit, Lösungsmittelbeständigkeit, Haftung.

In einer weiteren bevorzugten Ausführungsform wird den oben beschriebenen grobteiligen Bindemittelcopolymerisatdispersionen außerdem eine wasserlösliche Substanz zugesetzt, die vorzugsweise die rheologischen Eigenschaften des wäßrigen Systems verbessert. Speziell ist hier häufig eine verdickende Eigenschaft erwünscht, wie sie beispielsweise bevorzugt durch Zusatz wasserlöslicher Polymerer, wie modifizierten Cellulosen, z.B. Celluloseäthern, und/oder Poly(meth-)acrylat-Verdickern, Polyacrylamiden, Polyvinylpyrrolidon und anderen erzielt wird. Aber auch andere Einflußnahmen auf die rheologischen Eigenschaften der wäßrigen Copolymerisatdispersionen sowie der daraus hergestellten pigmentierten Lackabmischungen können in bevorzugten Ausführungsformen von Vorteil sein. Beispielsweise ist häufig eine thixotropierende Beeinflussung von Interesse, um einer möglichen Absetzungsneigung dispergierter Partikel in dem wäßrigen System entgegenzuwirken sowie gegebenenfalls gleichzeitig die Ablaufneigung bereits applizierter Lacke auf mehr oder weniger senkrecht stehenden Flächen zu vermeiden. Bevorzugt werden hier in wäßrigen Systemen wirksame Thixotropierungsmittel eingesetzt, wie z.B. Titanate und/oder kolloidale SiO$_2$-Typen (z.B. Aerosil). Gegebenenfalls können der Einsatz der oben genannten wasserlöslichen und rheologiewirksamen Polymeren und der Einsatz thixotropiewirksamer Agenten vorteilhaft miteinander kombiniert und dabei gegebenenfalls resultierende synergistische Effekte beider Komponenten ausgenützt werden.

Die Erfindung wird durch die nachstehenden Beispiele näher erläutert.

Vergleichsbeispiel 1

Herstellung einer Bindemitteldispersion (Dispersionscopolymerisat ohne funktionelle Monomereinheiten, als Vergleich).

A) Saatgrundlage (1 VA)

Die als Saatgrundlage eingesetzte Dispersion wird nach dem folgenden Verfahren hergestellt:

Zu einer Vorlage von 750 Gew.-Teilen Wasser werden bei 80 °C 7,5 Gew.-Teile einer Monomeremulsion gegeben, die aus 438 Gew.-Teilen H$_2$O, 31,5 Gew.-Teilen Isooctylphenolpolyglykolether (10 EO-Einheiten), 15,7 Gew.-Teile Natriumlaurylsulfat, 31,5 Gew.-Teile Trichlorbrommethan, 787,5 Gew.-Teile Methylmethacrylat und 787,5 Gew.-Teile Butylacrylat besteht. Der Polymerisationsstart erfolgt durch Zusatz von 10 Gew.-Teilen einer Lösung von 2 Gew.-Teilen Ammoniumpersulfat in 100 Gew.-Teilen H$_2$O ebenfalls bei 80 °C. Der Rest der Initiatorlösung wird mit der übrigen Monomeremulsion während 4 Stunden zudosiert. Die Nachreaktion erfolgt während 1 Stunde ebenfalls bei 80 °C.

Feststoffgehalt der resultierenden Dispersion: 55,1 Gew.-%; mittlere Teilchengröße: 0,22 μm.

B) Saatpolymerisation, Versuch 1 VB/1

Zu einer Mischung aus 18,2 Gew.-Teilen Saatgrundlage 1 VA und 714 Gew.-Teilen Wasser werden 100 Gew.-Teile einer Mischung aus 480 Gew.-Teilen Methylmethacrylat, 120 Gew.-Teilen Butylacrylat und 6 Gew.-Teilen Tetrakismercaptoacetylpentaerythrit (Radikalkettenüberträger) zugesetzt und mit 10 Gew.-Teilen einer Lösung von 1,5 Gew.-Teilen Ammoniumpersulfat in 100 Gew.-Teilen Wasser die Polymerisation bei 80 °C gestartet.

Nach 30 Minuten Vorpolymerisation wird mit der Zudosierung der restlichen Monomerenmenge begonnen (Gesamtdosierzeit: 7,5 Stunden). Nach Zusatz der Hälfte der Monomerenmenge wird mit der Zudosierung einer Lösung von 0,6 Gew.-Teilen Natriumlaurylsulfat in 100 Gew.-Teilen Wasser begonnen. Die Dosierung dieser Lösung erfolgt in der Weise, daß bis zum Ende der Monomerendosierung die Hälfte dieser Lösung zugesetzt ist und danach der verbliebene Rest auf einmal zugegeben wird.

Feststoffgehalt der resultierenden Dispersion: 39,5 Gew.-%; mittlere Teilchengröße: 0,70 μm.

C) Unter Einsatz der Saatgrundlage 1 VA werden nach der unter B), Versuch 1 VB/1 beschriebenen Verfahrensweise die weiteren Polymerisationsversuche 1 VB/2, 1 VB/3 und 1 VB/4 mit der Abänderung durchgeführt, daß dabei der Anteil an Radikalkettenüberträger (= RKÜ) in der in Tabelle 1 angegebenen Weise variiert wird. Die RKÜ-Mengen sowie die Eigenschaften der resultierenden Dispersionen sind in der Tabelle 1 zusammengefaßt wiedergegeben. Anwendungstechnische Eigenschaften der Dispersionen sind in Tabelle 2 zusammengefaßt.

Tabelle 1

Saatpolymerisationen nach Vorschrift 1 VB/1 unter Verwendung steigender Mengen RKÜ (Tetrakismercaptoacetylpentaerythrit).

| Versuch Nr. | Emulsionscopolymerisation | | Dispersion | | Copolymerisat | |
|---|---|---|---|---|---|---|
| | Saatlatex | Gew.-Tl. RKÜ | Partikelgröße (μm) | Feststoffgehalt (Gew.-%) | Schmelzvisk. /mPas·s bei 180°C | Glasübergangstemp. (°C) [+] |
| 1 VB/1 | 1 VA | 6 | 0,70 | 39,5 | 650 000 | 65,5 |
| 1 VB/2 | 1 VA | 12 | 0,75 | 39,5 | 138 000 | 60 |
| 1 VB/3 | 1 VA | 18 | 0,74 | 39,0 | 40 000 | 56 |
| 1 VB/4 | 1 VA | 30 | 0,74 | 38,2 | 1 500 | 49,5 |

[+] Ermittelt durch Differentialthermoanalyse (DTA)

Tabelle 2

Anwendungstechnische Eigenschaften pigmentierter und unpigmentierter Einbrennlacke auf Basis von Dispersionen der Versuche 1 VB/1 bis 1 VB/4.

| Dispersion aus Versuch Nr. | Beschichtung[1] mit unpigmentierter[3] Dispersion | | | Beschichtung[1] mit pigmentierter[4] Dispersion | | |
|---|---|---|---|---|---|---|
| | pulverf. Beschichtg. nach Ablüften der Dispersion | nach 30 Min. bei 150°C Einbrennung[2] | Dicke der Beschichtung (μm) | pulverf. Beschichtg. nach Ablüften der Dispersion | nach 30 Min. bei 150°C Einbrennung[2] | Dicke der Beschichtung (μm) |
| 1 VB/1 | + + | Rißbild. | 50 | + + | Rißbild. | 27 |
| 1 VB/2 | + + | + | 30 | + + | + | 35 |
| 1 VB/3 | + + | + | 30 | + + | + | 30 |
| 1 VB/4 | + + | + | 30 | + + | + | 22 |

[1]   Es werden phosphatierte Eisenbleche (Bonder 132) beschichtet.
[2]   Alle Einbrennbeschichtungen zeigen eine Xylolbeständigkeit von weniger als 1 Minute bei 20°C.
+ + = Rißfreie Pulverschicht; + = Rißfreier Film
[3]   Unpigmentierte Dispersionen: Festkörper ca. 39 Gew.-%, pH = 2,5

Zusammensetzung:     100,0 Gew.-Tl. Dispersion (Feststoffgehalt 40 Gew.-%)
                                         4,5 Gew.-Tl. Netzmittelmischung*
                                     104,5 Gew.-Tl.

[4]   Pigmentierte Dispersionen: Pigment-Bindemittelverhältnis = 0,2:1, pH-Wert = 8,9
Zusammensetzung:     100,0 Gew.-Tl. Dispersion (Feststoffgehalt 40 Gew.-%)
                                         4,5 Gew.-Tl. Netzmittelmischung*
                                       30,0 Gew.-Tl. $TiO_2$-Paste**
                                     134,5 Gew.-Tl.

*   Netzmittelmischung:     10 Gew.-Tl. Orotan 731 SD[a]
                                                 25 gew.-%ig in $H_2O$
                                           20 Gew.-Tl. Triton CF 10[b]
                                           15 Gew.-Tl. Natriumnitrit, 10 gew.-%ig in $H_2O$
                                           45 Gew.-Tl.

**   $TiO_2$-Paste: 320,0 Gew.-Tl. $TiO_2$ Cl 310 (Rutiltyp, Kronos Cl 310)
                                 4,8 Gew.-Tl. Triton CF 10[b]
                                 3,2 Gew.-Tl. Orotan 731 SD[a]
                                               25 gew.-%ig in $H_2O$
                             10,2 Gew.-Tl. Viscalex HV 30 (Polyacrylat-Verdicker)
                           450,0 Gew.-Tl. $H_2O$
                           788,2 Gew.-Tl.

[a]   Orotan 731 SD = Na-Salz eines Copolymerisats aus Diisobuten und Maleinsäureanhydrid
[b]   Triton CF 10 = Isooctylphenolpolyglykolbenzylether

**Vergleichsbeispiel 2**

Analog dem Vergleichsbeispiel 1 B), Versuch 1 VB/1 werden Saatpolymerisationen unter Vorlage der Saatgrundlage 1 VA aus Vergleichsbeispiel 1, A) und Variation der Herstellvorschrift wie in Tabelle 3 angegeben durchgeführt. Es wird jeweils eine Monomerenmischung von insgesamt 600 Gewichtsteilen eingesetzt, in welcher die Comonomeren Methylmethacrylat (MMA) und Butylacrylat (BuA) im Gewichtsverhältnis 4:1 vorliegen und in welcher zusätzlich die funktionelle und vernetzungsfähige Gruppen tragenden Comonomeren Methacrylsäure (MAS) und Glycidylmethacrylat (Glyma) sowie RKÜ (Tetrakismercaptoacetylpentaerythrit) mit den in der Tabelle 3 angegebenen Gewichtsanteilen enthalten sind. Tabelle 3 gibt außerdem den Feststoffgehalt der aus den Versuchen 2 VB/1 bis 2 VB/8 resultierenden Dispersionen wieder. Der mittlere Teilchendurchmesser (D) der Dispersionscopolymerisatpartikel beträgt ca. 0,8–0,9 µm.

Tabelle 3

Saatpolymerisation nach Vorschrift 1 VB/1 unter Variation des Gehalts an funktionelle, vernetzungsfähige Gruppen tragenden Comonomereinheiten (Glyma, MAS) und Variation der Zusatzmengen an RKÜ (Tetrakismercaptoacetylpentaerythrit).

| Versuch Nr. | Vorlage Saatgrund-lage 1 VA (Gew.-Tl.) | H₂O (Gew.-Tl.) | Monomerenmischung | | Glyma (Gew.-Tl.) | RKÜ (Gew.-Tl.) | MAS (Gew.-Tl.) | Feststoff-gehalt der Dispersion (Gew.-%) |
|---|---|---|---|---|---|---|---|---|
| | | | MMA (Gew.-Tl.) | BuA (Gew.-Tl.) | | | | |
| 2 VB/1 | 18,16 | 769,8 | 480 | 120 | 30 | 18 | – | 39,9 |
| 2 VB/2 | 18,16 | 813,0 | 480 | 120 | 60 | 16 | – | 40,1 |
| 2 VB/3 | 18,16 | 787,4 | 480 | 120 | 30 | 30 | – | 39,7 |
| 2 VB/4 | 18,16 | 817,4 | 430 | 120 | 60 | 30 | – | 40,0 |
| 2 VB/5 | 18,16 | 743,3 | 480 | 120 | 30 | 18 | 6 | 40,1 |
| 2 VB/6 | 18,10 | 752,1 | 480 | 120 | 30 | 18 | 12 | 40,6 |
| 2 VB/7 | 18,16 | 781,5 | 480 | 120 | 30 | 30 | 6 | 38,6 |
| 2 VB/8 | 18,16 | 790,3 | 480 | 120 | 30 | 30 | 12 | 39,7 |

In Tabelle 4 ist das Ergebnis anwendungstechnischer Ausprüfungen der in Tabelle 3 beschriebenen Dispersionen Nr. 2VB/1 bis 2VB/8 in Weißlacken zusammengefaßt wiedergegeben. Dazu werden phosphatierte Eisenbleche (Bonder 132) mit den jeweiligen Weißlackdispersionen beschichtet, bei Raumtemperatur getrocknet und anschließend bei 180°C 30 Minuten eingebrannt. Die resultierende Schichtdicke der Weißlacke beträgt ca. 30 µm. Die Glanzwerte (in %) werden bei 20°C und 60°C gemessen und liegen bei praktisch allen Versuchen bei 80 ± 3% und bei 92 ± 2%. Die Erichsentiefung wird in bekannter Weise bestimmt und ist in mm angegeben. Wie das Ergebnis zeigt, liegt die Erichsentiefung bei allen Versuchen sehr unbefriedigend niedrig bei etwa 1 mm. Als Vergleich wird auch die Dispersion von Versuch Nr. 1VB/4 aus Tabelle 1 geprüft.

Die Herstellung der Weißlacke erfolgt gemäß der im Anschluß an Tabelle 4 angegebenen Rezeptur.

Tabelle 4

Anwendungstechnische Eigenschaften eingebrannter Weißlacke[1] auf Basis von Dispersionen der Versuche 2 VB/1 bis 2 VB/8.
Glanzmessung und Erichsentiefung.

| Dispersion Nr. | 1 VB/4 | 2 VB/1 | 2 VB/2 | 2 VB/3 | 2 VB/4 | 2 VB/5 | 2 VB/6 | 2 VB/7 | 2 VB/8 |
|---|---|---|---|---|---|---|---|---|---|
| Glanz 20°/60° (in %) | 83/92 | 82/91 | 78/88 | 82/91 | 80/90 | 81/92 | 82/91 | 81/91 | 80/92 |
| Erichsen-tiefung (in mm) | 1,0 | 1,0 | 1,1 | 1,2 | 1,2 | 1,0 | 1,0 | 1,1 | 1,4 |

[1] Rezeptur zur Formulierung der Weißlacke:

100,00 Gew.-Teile Dispersion (40 Gew.-% Feststoffgehalt)
　2,50 Gew.-Teile Netzmittelmischung*
20,00 Gew.-Teile $TiO_2$-Paste**
10,00 Gew.-Teile Wasser
132,50 Gew.-Teile

Alle Rezepturbestandteile werden unter Rühren der vorgelegten Dispersion beigemischt.

* Netzmittelmischung:
　10,00 Gew.-Teile Orotan 731 SD (25 gew.-%ig in $H_2O$)
　20,00 Gew.-Teile Triton CF 10
　15,00 Gew.-Teile Natriumnitrit (10 gew.-%ig in $H_2O$)
　45,00 Gew.-Teile

** $TiO_2$-Paste:
　400,00 Gew.-Teile $TiO_2$ (Rutiltyp, Kronos RN 59)
　　9,60 Gew.-Teile Triton CF 10
　　6,40 Gew.-Teile Orotan 731 SD (25 gew.-%ig in $H_2O$)
　384,00 Gew.-Teile $H_2O$
　800,00 Gew.-Teile

Beispiel 1

Analog der Herstellungsvorschrift in dem Vergleichsbeispiel 1 werden Saatpolymerisationen unter Verwendung der Saatgrundlage 1VA aus Vergleichsbeispiel 1, A), und Monomerkomponenten gemäß Vergleichsbeispiel 2, jedoch mit Ausführung einer Vorpolymerisation, durchgeführt. Es werden die Versuche 1B/1 und 1B/2 mit den in der Tabelle 5 angegebenen Komponenten und Mengenanteilen ausgeführt. In Tabelle 5 ist ferner der Feststoffgehalt der resultierenden Dispersionen (in Gew.-%) angegeben. Der Versuch 1B/1 wird zur Molekulargewichtserniedrigung unter Zusatz eines RKÜ (Tetrakismercaptoacetylpentaerythrit) durchgeführt, wogegen der Versuch 1B/2 ohne RKÜ-Zusatz erfolgt. Einzelheiten sind der Tabelle 5 zu entnehmen.

Tabelle 5
Saatpolymerisation mit und ohne Zusatz von RKÜ (Tetrakismercaptoacetylpentaerythrit).

| Versuch Nr. | Vorlage Saatgrundlage 1 VA (Gew.-Tl.) | $H_2O$ (Gew.-Tl.) | Monomerenmischung (Gew.-Tl.) | Monomerenmischung | | | | | Feststoffgehalt der Dispersion (Gew.-%) |
|---|---|---|---|---|---|---|---|---|---|
| | | | | MMA (Gew.-Tl.) | BuA (Gew.-Tl.) | Glyma (Gew.-Tl.) | MAS (Gew.-Tl.) | RKÜ (Gew.-Tl.) | |
| 1 B/1 | 10,83 | 794,3 | 50 | 480 | 120 | 30 | 24 | 18 | 40,2 |
| 1 B/2 | 10,83 | 767 | 50 | 420 | 180 | 30 | 24 | – | 37,7 |

Tabelle 6 zeigt die Glanzwerte sowie die Erichsentiefung von eingebrannten Klarlacken, die aus den einzelnen Dispersionen der Versuche Nr. 1B/1 und 1B/2 sowie aus einer Mischung der Dispersionen 1B/1 und 1B/2 im Gew.-Verhältnis 3:1 jeweils entsprechend der unterhalb von Tabelle 6 aufgeführten Klarlackrezeptur[1] hergestellt werden. Hierzu werden mit der jeweiligen wäßrigen Klarlackdispersion phosphatierte Eisenbleche (Bonder 132) beschichtet, bei Raumtemperatur getrocknet und anschließend bei 180 °C 30 Minuten eingebrannt. Die resultierende Schichtdicke der eingebrannten Klarlacke beträgt ca. 30 μm. Die Glanzwerte (in %) und die Erichsentiefung (in mm) werden analog dem Vergleichsbeispiel 2 ermittelt. Wie das Ergebnis in Tabelle 6 zeigt, resultieren mit der Dispersion 1B/1 gute Glanzwerte und eine schlechte Erichsentiefung, mit der Dispersion 1B/2 schlechte Glanzwerte und eine gute Erichsentiefung, wogegen mit dem erfindungsgemäßen Dispersionsgemisch aus 3 Gew.-Teilen 1B/1 und 1 Gew.-Teil 1B/2 sowohl gute Glanzwerte als auch eine gute Erichsentiefung resultieren.

Tabelle 6

Anwendungstechnische Eigenschaften eingebrannter Klarlacke[1] auf Basis von Dispersionen der Versuche 1 B/1 und 1 B/2 sowie einer Mischung dieser Dispersionen im Gew.-Verhältnis 3:1; Glanzmessung und Erichsentiefung.

| Dispersion aus Versuch Nr. | Einbrennklarlack aus: | | |
|---|---|---|---|
| | 1 B/1 | 1 B/2 | Mischung 1 B/1:1 B/2 = 3:1 (Gew.-Tl.) |
| Glanz 20°/60° (in %) | 80/92 | 12/34 | 72/86 |
| Erichsentiefung (in mm) | 1,4 | > 8 | > 8 |

¹ Rezeptur zur Formulierung der Klarlacke:

100 Gew.-Teile Dispersion (40 Gew.-% Feststoffgehalt)
2 Gew.-Teile Netzmittelmischung*
102 Gew.-Teile

\* Netzmittelmischung:

10 Gew.-Teile Orotan 731 SD (25 gew.-%ig in
$H_2O$)
20 Gew.-Teile Triton CF 10
15 Gew.-Teile Natriumnitrit (10 gew.-%ig in $H_2O$)

Die Netzmittelmischung wird unter Rühren der
vorgelegten Dispersion beigemischt.

Beispiel 2

Es wurden analog Beispiel 1 Saatpolymerisationen mit den in Tabelle 7 für die Versuche 2B/1 und
2B/2 aufgeführten Komponenten und Komponentenmengen ausgeführt. Als Initiator werden 9
Gew.-Teile Ammoniumpersulfat in 600 Gew.-
Teilen $H_2O$, und als Emulgator 3,6 Gew.-Teile Natriumlaurylsulfat in 600 Gew.-Teilen $H_2O$ eingesetzt. In Tabelle 7 ist ferner der Feststoffgehalt der
resultierenden Dispersionen (in Gew.-%) aufgeführt. Der Versuch 2B/2 wird unter Zusatz einer
geringen Menge RKÜ (Tetrakismercaptoacetylpentaerythrit) und der Versuch 2B/1 mit der 10-
fachen Menge RKÜ, vergleichsweise zu Versuch
2B/2, ausgeführt, so daß beim Versuch 2B/1 ein
niedrigeres durchschnittliches Molekulargewicht
des resultierenden Dispersionscopolymerisats erwartet werden kann als beim Versuch 2B/2.

Tabelle 7
Saatpolymerisation mit unterschiedlichen Zusatzmengen an RKÜ (Tetrakismercaptoacetylpentaerythrit)

| Ver-such Nr. | Vorlage Saat-grundlage 1 VA (Gew.-Tl.) | $H_2O$ (Gew.-Tl.) | Mono-meren-mischung (Gew.-Tl.) | Monomerenmischung | | | | | Feststoff-gehalt der Dispersion (Gew.-%) |
| | | | | MMA (Gew.-Tl.) | BuA (Gew.-Tl.) | Glyma (Gew.-Tl.) | MAS (Gew.-Tl.) | RKÜ (Gew.-Tl.) | |
|---|---|---|---|---|---|---|---|---|---|
| 2 B/1 | 65 | 4495 | 300 | 2880 | 720 | 180 | 144 | 108 | 41,4 |
| 2 B/2 | 65 | 4626 | 300 | 2700 | 900 | 180 | 144 | 18 | 40,0 |

Tabelle 8 zeigt die Glanzwerte sowie die Erichsentiefung von eingebrannten Klarlacken, die aus
den einzelnen Dispersionen der Versuche 2B/1
und 2B/2 sowie einer Mischung der Dispersionen
2B/1 und 2B/2 im Gew.-Verhältnis 3:1 hergestellt
werden. Die Herstellung der Klarlacke und deren
Einbrennen erfolgt wie in Beispiel 1 beschrieben,
ebenso die Bestimmung der Glanzwerte und der
Erichsentiefung. Wie das Ergebnis in Tabelle 8
zeigt, führt das erfindungsgemäße Dispersionsgemisch aus 2B/1 und 2B/2 im Gew.-Verhältnis 3:1
zu hervorragenden und überraschenden Ein-
brennklarlack-Eigenschaften.

Tabelle 8

Anwendungstechnische Eigenschaften eingebrannter Klarlacke auf Basis von Dispersionen
der Versuche 2 B/1 und 2 B/2 sowie einer Mischung dieser Dispersionen im Gew.-Verhältnis
3:1; Glanzmessung und Erichsentiefung.

| Dispersion aus Versuch Nr. | Einbrennklarlack aus: 2 B/1  2 B/2  Mischung 2 B/1:2 B/2 = 3:1 (Gew.-Tl.) | | |
|---|---|---|---|
| Glanz 20°/60° (in %) | 78/94 | 15/36 | 78/94 |
| Erichsentiefung (in mm) | 1,1 | 8 | 8 |

**Patentansprüche**

1. Verfahren zur Einbrennbeschichtung von
Oberflächen fester Materialien durch Auftragen
der benötigten Menge einer wäßrigen Dispersion
auf die zu beschichtende Oberfläche, wobei die
Dispersion als Bindemittel ein grobteiliges, vernetzungsfähiges Dispersionscopolymerisat aus
olefinisch ungesättigten Monomeren sowie gegebenenfalls weitere Bestandteile aus der Gruppe
Pigmente, Farbstoffe, Füllstoffe, wasserlösliche
und/oder wasserdispergierbare Harze, Fremdvernetzer, Vernetzungskatalysatoren, Verdickungsmittel, Thixotropierungsmittel, Netzmittel, Korrosionsschutzmittel, Frostschutzmittel, Lichtstabilisatoren, Antioxidantien und Entschäumer enthält,
Ablüften bzw. Trocknen der feuchten Beschichtung und nachfolgendes Einbrennen, dadurch gekennzeichnet, daß das vernetzungsfähige Dispersionscopolymerisat aus einem Gemisch von mindestens 2 Komponenten, die gleiche oder verschiedene Monomereinheiten enthalten können,
besteht, von denen mindestens eine Komponente
A, die grobteilig ist, ein durchschnittliches Molekulargewicht im Bereich von 5000 bis 500 000 und
mindestens eine Komponente B, die grobteilig
oder feinteilig sein kann, ein durchschnittliches
Molekulargewicht im Bereich von 50 000 bis $10 \cdot 10^6$
besitzt, und man die Trocknung der aufgetragenen
Dispersionsmenge bei einer Temperatur unterhalb der Mindestfilmbildungstemperatur der Dispersion, die im Bereich von 30 bis 120°C liegt, durchführt und danach die getrocknete Beschichtung bei einer Temperatur oberhalb der Glasübergangstemperatur des Copolymerisats einbrennt.

2. Verfahren nach Anspruch 1, dadurch gekennzeichnet, daß das Gewichtsverhältnis der Komponenten A:B im Bereich von 99:1 bis 1:1 liegt.

3. Verfahren nach Anspruch 1, dadurch gekennzeichnet, daß die Komponente A unter Verwendung eines Molekulargewichtsreglers und die Komponente B ohne die Verwendung eines Molekulargewichtsreglers hergestellt wurden.

4. Verfahren nach Anspruch 1, dadurch gekennzeichnet, daß der mittlere Teilchendurchmesser des vernetzungsfähigen Bindemitteldispersionscopolymerisats der Komponente A im Bereich von 0,5 bis 5 µm liegt.

5. Verfahren nach Anspruch 1, dadurch gekennzeichnet, daß die wäßrige Dispersion ein wasserlösliches und/oder wasserdispergierbares Harz aus der Reihe Acrylatharze, Melamin-Formaldehydharze, Isocyanatharze enthält.

6. Verfahren nach Anspruch 1, dadurch gekennzeichnet, daß das Dispersionscopolymerisat funktionelle Reste aus der Reihe der Hydroxy-, Amido, Aldehyd-, Carboxyl-, Amino-, Epoxy-, Thiol-, Cyano-, N-Methylol-, Isocyanato- und/oder blockierte Isocyanato-Gruppen als vernetzungsfähige Gruppen enthält.

7. Verfahren nach Anspruch 1, dadurch gekennzeichnet, daß das Dispersionscopolymerisat funktionelle Reste aus der Reihe der Hydroxy-, Carboxyl-, Epoxy-Gruppen als vernetzungsfähige Gruppen enthält.

8. Verfahren nach Anspruch 1, dadurch gekennzeichnet, daß die Komponente A durch Emulsions- oder Suspensionscopolymerisation unter Zusatz von Mercaptogruppen enthaltenden Radikalkettenüberträgersubstanzen hergestellt wurde.

9. Verfahren nach Anspruch 8, dadurch gekennzeichnet, daß Tetrakismercaptoacetylpentaerythrit als Radikalkettenüberträger verwendet wurde.

## Claims

1. A process for bake coating the surfaces of solid materials by applying the required amount of an aqueous dispersion to the surface to be coated, the dispersion containing, as the binder, a coarse-grained, crosslinkable dispersion copolymer formed from olefinically unsaturated monomers and, if appropriate, containing further constituents belonging to the group comprising pigments, dyestuffs, extenders, water-soluble and/or water-dispersible resins, extraneous crosslinking agents, crosslinking catalysts, thickeners, thixotropic agents, wetting agents, anti-corrosion agents, antifreeze agents, light stabilizers, antioxidants and anti-foaming agents, exposing the moist coating to the atmosphere and/or drying it and subsequently baking, wherein the crosslinkable dispersion copolymer is composed of a mixture of at least 2 components which can contain identical or different monomer units and of which at least one component A, which is coarse-grained, has an average molecular weight in the range from 5000 to 500000, and at least one component B, which can be coarse-grained or fine-grained, has an average molecular weight in the range from 50000 to $10 \times 10^6$, and the drying of the applied amount of dispersion is carried out at a temperature below the minimum filmformation temperature of the dispersion which is within the range from 30 to 120°C and the dried coating is then baked at a temperature above the glass transition temperature of the copolymer.

2. The process as claimed in claim 1, wherein the ratio by weight of the components A:B is within the range from 99:1 to 1:1.

3. The process as claimed in claim 1, wherein the component A has been prepared using a molecular weight regulator and the component B has been prepared without the use of a molecular weight regulator.

4. The process as claimed in claim 1, wherein the average particle diameter of the crosslinkable binder dispersion copolymer of component A is within the range from 0.5 to 5 µm.

5. The process as claimed in claim 1, wherein the aqueous dispersion contains a water-soluble and/or water-dispersible resin belonging to the series of acrylic resins, melamine-formaldehyde resins or isocyanate resins.

6. The process as claimed in claim 1, wherein the dispersion copolymer contains, as crosslinkable groups, functional radicals belonging to the series of hydroxyl, amido, aldehyde, carboxyl, amino, epoxy, thiol, cyano, N-methylol, isocyanato and/or masked isocyanato groups.

7. The process as claimed in claim 1, wherein the dispersion copolymer contains, as crosslinkable groups, functional radicals belonging to the series of hydroxyl, carboxyl and epoxy groups.

8. The process as claimed in claim 1, wherein the component A has been prepared by emulsion or suspension copolymerization with the addition of free radical chain transfer substances containing mercapto groups.

9. The process as claimed in claim 8, wherein tetrakismercaptoacetylpentaerythritol has been used as the free radical chain transfer agent.

## Revendications

1. Procédé pour revêtir, par des revêtements à cuire, des surfaces de matériaux solides, par application, sur la surface à revêtir, des quantités nécessaires d'une dispersion aqueuse, la dispersion contenant comme liant un copolymère en particules grossières, réticulables, obtenues en dispersion à partir de monomères à insaturation oléfinique, et contenant éventuellement d'autres constituants choisis parmi des pigments, des colorants, des charges, des résines hydrosolubles et/ou dispersables dans de l'eau, des agents étrangers de réticulation, des catalyseurs de réticulation, des agents d'épaississement, des agents conférant des propriétés de thixotropie, des mouillants, des agents de protection contre la corrosion, des agents de protection contre le gel, des stabilisants à l'égard des effets de la lumière, des antioxygènes et des agents de démoussage, départ de l'air ou séchage du revêtement humide puis cuisson de ce revêtement, procédé caractérisé en ce que le copolymère réticulable obtenu en dispersion consiste en un mélange d'au moins deux composants, qui peuvent contenir des motifs monomères identiques ou différents, l'un au moins, composant A, qui est en particules grossières, ayant un poids moléculaire moyen compris entre 5000,et 500 000 et au moins un composant B, qui peut être en particules grossières ou fines, ayant un poids moléculaire moyen compris entre 50 000 et 10·10$^6$, et l'on conduit le séchage de la quantité de dispersion ainsi appliquée en opérant à une température inférieure à la température minimale de formation de feuils de la dispersion, cette température se situant entre 30 et 120°C, puis l'on cuit le mélange, ainsi séché, à une température supérieure à la température de transition vitreuse du copolymère.

2. Procédé selon la revendication 1, caractérisé en ce que le rapport pondéral des composants A:B se situe entre 99:1 et 1:1.

3. Procédé selon la revendication 1, caractérisé en ce que le composant A a été préparé avec utilisation d'un régulateur du poids moléculaire et le composant B a été préparé sans utilisation d'un régulateur du poids moléculaire.

4. Procédé selon la revendication 1, caractérisé en ce que le diamètre particulaire moyen du copolymère du composant A, obtenu en dispersion et formateur d'un liant réticulable, se situe entre 0,5 et 5 µm.

5. Procédé selon la revendication 1, caractérisé en ce que la dispersion aqueuse contient une résine hydrosoluble et/ou dispersable dans l'eau, choisie parmi les résines acryliques, des résines de mélamine-formaldéhyde, des résines d'isocyanate.

6. Procédé selon la revendication 1, caractérisé en ce que le copolymère obtenu en dispersion contient, à titre de groupes capables d'une polymérisation, des restes fonctionnels choisis parmi des groupes hydroxyle, amido, aldéhyde, carboxyle, amino, époxy, thiol, cyano, N-méthylol, isocyanato et/ou isocyanato bloqué.

7. Procédé selon la revendication 1, caractérisé en ce que le copolymère obtenu en dispersion contient, comme groupes capables de réticulation, des restes fonctionnels choisis parmi les groupes hydroxyle, carboxyle, époxy.

8. Procédé selon la revendication 1, caractérisé en ce que le composant A a été préparé par copolymérisation en émulsion ou en suspension, avec addition d'agents radicalaires de transfert de chaîne contenant des groupes mercapto.

9. Procédé selon la revendication 8, caractérisé en ce qu'on a utilisé, comme agent radicalaire de transfert de chaîne, le tétrakismercaptoacétylpentaérythritol.